(19) Europäisches Patentamt

**European Patent Office**

**Office européen des brevets**

(11) Veröffentlichungsnummer: **0 363 514 B1**

(12) **EUROPÄISCHE PATENTSCHRIFT**

(45) Veröffentlichungstag der Patentschrift: **07.01.93**

(21) Anmeldenummer: **88117056.7**

(22) Anmeldetag: **13.10.88**

(51) Int. Cl.⁵: **H02M 7/5387**

(54) **Verfahren zum Ansteuern von Drehstromverbrauchern durch sinusbewertete Pulsweitenmodulation.**

(43) Veröffentlichungstag der Anmeldung:
**18.04.90 Patentblatt 90/16**

(45) Bekanntmachung des Hinweises auf die
Patenterteilung:
**07.01.93 Patentblatt 93/01**

(84) Benannte Vertragsstaaten:
**AT DE FR GB IT NL**

(56) Entgegenhaltungen:
**EP-A- 0 248 449**

**SIEMENS COMPONENTS vol. 21, no. 1, 1986,
Seite 18 - 24; K. WETZEL et al: "Wider speed
range for induction motors thanks to new
micro and power electronics components"**

(73) Patentinhaber: **SIEMENS AKTIENGESELL-
SCHAFT
Wittelsbacherplatz 2
W-8000 München 2(DE)**

(72) Erfinder: **Wetzel, Klaus, Ing. Grad.
Schwingensteinweg 14
W-8000 München 83(DE)**

**Beschreibung**

Die Erfindung betrifft ein Verfahren zum Ansteuern von Drehstromverbrauchern durch sinusbewertete Pulsweitenmodulation von drei um 120° zueinander verschobener Phasen und eine Vorrichtung zur Durchführung des Verfahrens.

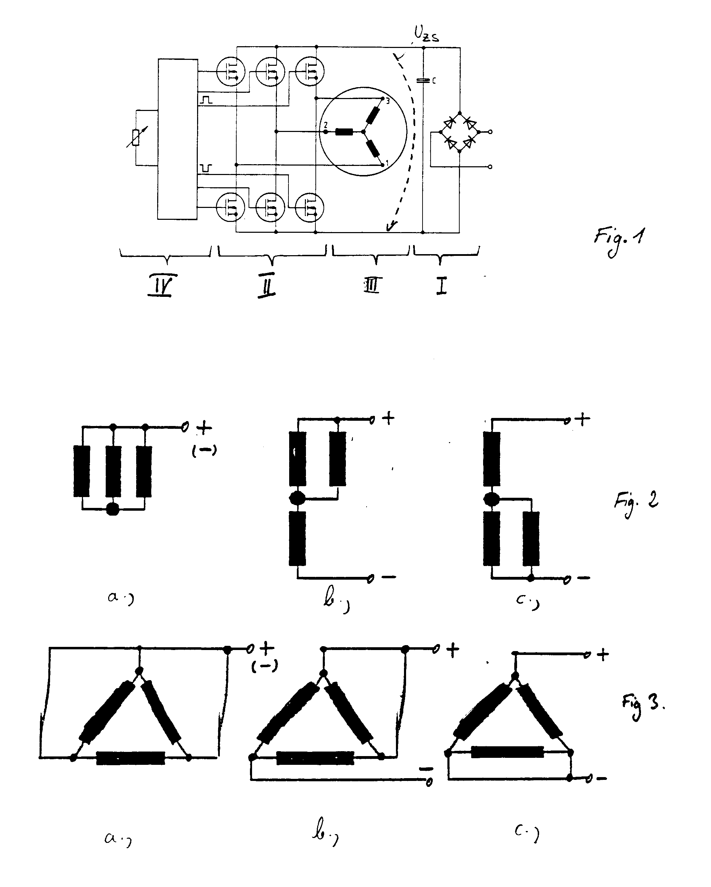

Aus der Veröffentlichung Siemens Components 24, 1986, Heft 1, Seite 18 bis 24 ist ein Umrichter für Drehstrommotoren bekannt, wie dieser in FIG 1 der vorliegenden Beschreibung dargestellt ist. Eine aus einer Gleichrichteranordnung I gewonnene Zwischenkreisspannung $U_{ZS}$ wird über drei Transistorhalbbrücken II mit einer Schaltfrequenz und sinusbewerteten Impulsweiten an die drei Phasen des Drehstrommotors III geschaltet. Dabei werden die Transistorhalbbrücken II durch eine Ansteuereinrichtung IV angesteuert, in der die für eine zur Erzeugung der Sinusfrequenz notwendigen Werte der Pulsweiten gespeichert sind.

Zur Berechnung dieser Pulsweiten wird eine ganze Periode der zu erzeugenden Sinusfrequenz in eine Anzahl von z. B. 48 Stützstellen zerlegt und der jeweilig dazugehörende Amplitudenwert bestimmt. Die Amplitudenwerte dieser Stützstellen und die wegen der zweimaligen Phasenverschiebung von 120° notwendigen weiteren 32 Datenworte (16 je 120°), also insgesamt 80 Datenworte, sind als Datenworte in einer Speichereinrichtung oder in einer Tabelle eines Mikrokontrollers abgelegt. In einem Pulsweitenmodulator werden die Datenworte pulsweitenmoduliert. Während des Programmablaufes werden die jeweils aktuellen Tabellenwerte in Zählregister des Pulsweitenmodulators geladen, die dann nach Interruptroutinen zu Null gezählt werden und als Pulsweiten an den Ausgangsklemmen der Ansteuerschaltung zur Verfügung stehen. Die Interruptroutinen werden durch eine Takteinrichtung des Mikrokontrollers gesteuert. Der Steuerungsablauf wird in der bekannten Veröffentlichung durch integrierte Schaltkreise von Siemens realisiert. Als Pulsweitenmodulator ist der integrierte Schaltkreis SLE 4520 und als Mikrokontroller der integrierte Schaltkreis SAB 8751 bzw. SAB 8051 vorgesehen.

Bei dem bekannten Verfahren ist es notwendig bei einer Drehzahländerung des Drehstrommotors für eine ganze Periode der zu erzeugenden neuen Sinusfrequenz die neuen Amplitudenwerte zu ermitteln und in einer Speichereinrichtung abzulegen. Eine Drehzahländerung ist so mit einer beträchtlichen Erhöhung des Speicherplatzbedarfes verbunden.

Der vorliegenden Erfindung liegt die Aufgabe zugrunde, ein vereinfachtes Verfahren zur Synthese einer sinusbewerteten Drei-Phasen-Pulsweitenmodulation für Drehstromverbraucher und eine Vorrichtung zur Durchführung dieses Verfahrens anzugeben, durch das sowohl die Schalthäufigkeit der Transistorhalbbrücken als auch der Speicherplatzbedarf für die Amplitudenwerte der zu erzeugenden Sinusfrequenz erheblich reduziert wird.

Diese Aufgabe wird durch die kennzeichnenden Merkmale des Anspruchs 1 gelöst.

Weiterbildungen dieses erfindungsgemäßen Verfahrens sind Gegenstand der Unteransprüche 2 bis 10.

Eine Vorrichtung zur Durchführung des Verfahrens ist Gegenstand des Anspruchs 11. Weiterbildungen dieser Vorrichtung sind Gegenstand der auf diesen Anspruch 11 zurückbezogenen Unteransprüche.

Die Erfindung beruht auf der Erkenntnis, daß für die drei Wicklungen eines von einem Umrichter gespeisten Drehstromverbrauchers nur wenige Schaltzustände innerhalb einer Periode der zu erzeugenden Sinusfrequenz existieren. Diese wenigen Schaltzustände wiederholen sich mit vertauschten Wicklungen alle 60° und damit sechsmal innerhalb einer Periode. Weiterhin nutzt die Erfindung die Tatsache aus, daß es gleichgültig ist, ob bei dem Schaltzustand dreier kurzgeschlossener Wicklungen der Bezugspol der Wicklungen mit positivem oder negativem Potential verbunden ist.

Durch das erfindungsgemäße Verfahren nur jeweils zwei der drei Wicklungen des Drehstromverbrauchers mit sinusbewerteten Pulsweiten zu takten und alle 60° dieses sinusbewerteten Pulsweiten invertiert bzw. nicht invertiert zu wiederholen, wobei die Phasen zyklisch vertauscht werden, wird sowohl der Schaltungsaufwand als auch der Speicherplatzbedarf entscheidend gegenüber dem bisher bekannten Verfahren verringert. Die Programmlaufzeit eines zur Ansteuerung der Transistorhalbbrücken des Umrichters notwendigen Mikrokontrollers kann beispielsweise um etwa 30 % reduziert werden. Der Mikrokontroller kann dann für andere Aufgaben eingesetzt werden.

Ein weiterer Vorteil des erfindungsgemäßen Verfahrens liegt vor allem auch darin, daß die Schalthäufigkeit der Transistorhalbbrückenschalter, im allgemeinen relativ kostenintensive Leistungsschalter, um ein Drittel reduziert werden kann, da jeweils eine Phase in einem 60°-Abschnitt ungetaktet bleibt. Im Gegensatz zu den bisher bekannten Verfahren ist zwar ein zyklisches Vertauschen der Phasenansteuerung und damit ein Umschalten notwendig. Die für das Ansteuern der dritten Phase jedoch notwendige Hardware (z. B. Register, Zähler, Nulldetektor usw.) kann jedoch entfallen, so daß insgesamt die notwendige Chipfläche für einen Pulsweitenmodulator nach dem erfindungsgemäßen Verfahren um ca. 20 % reduziert werden kann.

Die Erfindung wird im folgenden anhand von weiteren 11 Figuren ausführlich erläutert. Es zeigen:

FIG 2      die mögliche Schaltzustände von drei Wicklungen eines Drehstrommotors in Sternschaltung,

FIG 3      die mögliche Schaltzustände von drei Wicklungen eines Drehstrommotors in Dreiecksschaltung,

FIG 4      eine Darstellung einer drei-phasigen Ausgangsspannung mit 120° zueinander verschobener Phasen PH1, PH2 und PH3,

FIG 5      ein Impulsdiagramm zum erfindungsgemäßen Ansteuern von jeweils zwei Phasen in einem 60°-Abschnitt eines Drehstromverbrauchers durch sinusbewertete Pulsweiten mit anschließendem zyklischen Vertauschen der Phasenansteuerung,

FIG 6      eine Darstellung der erfindungsgemäßen Ansteuerung eines Drehstrommotors in Stern- und in Dreiecksschaltung während einer vollen Motorperiode,

FIG 7      den Stromverlauf in einer Wicklung des Drehstrommotors in Dreiecksschaltung nach FIG 6 beim Einschalten,

FIG 8      den Stromverlauf der Wicklung nach FIG 7 im eingeschwungenem Zustand und bei geringer Last,

FIG 9      den Stromverlauf in der Wicklung nach FIG 7 im eingeschungenem Zustand und bei hoher Last,

FIG 10    Beispiel für ein Impulsdiagramm mit acht in einem 60°-Abschnitt sinusbewerteten Pulsweiten $A_i$ und $B_i$ und den dazugehörigen invertierten Pulsweiten $\overline{A_i}$ und $\overline{B_i}$ bei einer hohen zu erzeugenden Sinusfrequenz,

FIG 11    Impulsdiagramm für erfindungsgemäßes Ansteuern von Drehstromverbrauchern bei niedriger Sinusfrequenz und mit Pulsweitenwiederholung, und

FIG 12    eine Schaltungsanordnung zum Ansteuern von Drehstromverbrauchern nach dem erfindungsgemäßen Verfahren.

In FIG 2 sind die möglichen Schaltzustände eines Drehstrommotors in Sternschaltung dargestellt. Bleibt das Vertauschen der drei Motorwicklungen außer Betracht, so kann insgesamt zwischen drei Schaltzuständen bei getakteter Ansteuerung der Motorwicklungen unterschieden werden: Entweder es sind alle drei Motorwicklungen parallel geschaltet (a) und mit dem positiven oder negativen Potential der Zwischenkreisspannung verbunden, oder (b) zwei Wicklungen sind an positives und eine Wicklung an negatives Potential geschaltet, oder aber (c) eine Wicklung liegt am positiven und zwei Wicklungen am negativen Potential der Zwischenkreisspannung. Bei dem Schaltzustand mit drei parallelgeschalteten Motorwicklungen (a) ist es gleichgültig, ob positives oder negatives Potential am Kurzschlußpunkt der drei Wicklungen liegt.

In FIG 3 sind die insgesamt drei möglichen Schaltungszustände bei einer Dreiecksschaltung des Drehstrommotors gezeigt. Im ersten Schaltzustand (a) liegen alle Verbindungspunkte der drei Motorwicklungen auf positivem oder negativem Potential, während im zweiten Schaltzustand (b) nur zwei Verbindungspunkte mit positivem Potential und ein Verbindungspunkt mit negativem Potential verbunden ist. Der dritte mögliche Schaltzustand umfaßt zwei an negatives Potential angeschlossene Verbindungspunkte der Motorwicklungen, während ein Verbindungspunkt am positiven Potential der Zwischenkreisspannung liegt. Auch hier ist es gemäß der Erfindung gleichgültig, ob im ersten Schaltzustand (a) positives oder negatives Potential an den Verbindungspunkten der Motorwicklungen liegt.

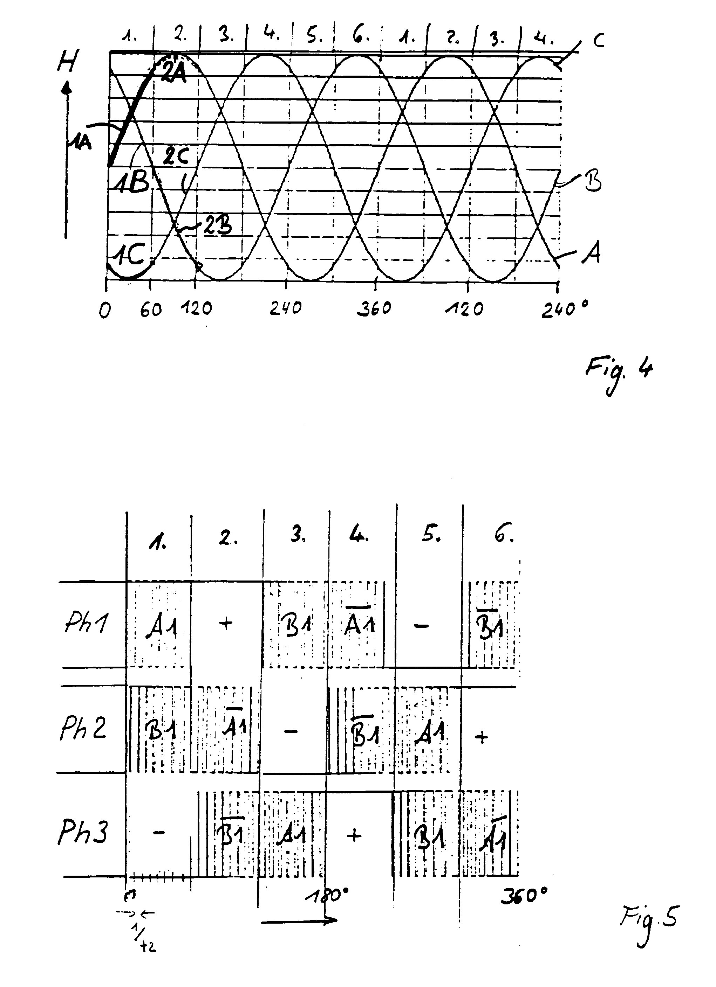

In FIG 4 sind die Kurvenverläufe A, B, C aller drei Phasen eines dreiphasigen sinusförmigen Spannungsverlaufes mit jeweils 120° Phasenverschiebung zueinander gezeigt, wie dies für das Ansteuern von Drehstrommotoren notwendig ist. Es ist deutlich zu erkennen, daß sich der dreiphasige Spannungsverlauf alle 120° wiederholt. Weiterhin ist zu erkennen, daß sich der dreiphasige Verlauf im ersten, dritten, fünften usw. Abschnitt 1, 3, 5,..., also zwischen 0 und 60°, 120° und 180°, usw., gegenüber dem Spannungsverlauf im zweiten, vierten, sechsten usw. Abschnitt 2, 4, 6... und damit zwischen 60° und 120°, 180 und 240° usw. invertiert ist.

Erfindungsgemäß werden die drei sinusförmigen Phasenspannungen A, B und C zum Ansteuern des Drehstrommotors sinusbewertet pulsweiten moduliert. Durch die sinusbewertete Pulsweitenmodulation wird die Verlustleistung im Umrichter der Ansteuerschaltung begrenzt und dessen Gesamtwirkungsgrad verbessert. Zur Berechnung der sinusbewerteten Pulsweiten ist es gemäß der Erfindung ausreichend einen der 60°-Abschnitte 1, 2, 3... und die darin enthaltenen Phasenteilspannungen 1A, 1B, 1C oder 2A, 2B, 2C usw. zu betrachten. Im ersten Abschnitt 1 werden z. B. die Pulsweiten $C_i$ für die Phasenteilspannung 1C zu 0 gesetzt, so daß die Phase C im ersten Abschnitt 1 von 0 bis 60° ungetaktet bleibt. Für die Pulsweiten $A_i$ und $B_i$ im ersten Abschnitt 1 gelten dann folgende Zusammenhänge:

$A_i = K \cdot \cos(W_i - 60°)$,

$B_i = K \cdot \cos(W_i)$,

$C_i = 0$, und

$K = H \cdot AF \cdot \sin 60°$,

wenn H der Höchstwert für eine Impulsweite, AF ein Amplitudenfaktor und Wi der Winkel bei einer Stützstelle i der zu erzeugenden Sinusfrequenz im Abschnitt zwischen 0 und 60° ist.

Im zweiten Abschnitt 2 ergeben sich ähnliche Verhältnisse, im Gegensatz zum ersten Abschnitt 1 jedoch zyklisch vertauscht und invertiert. Die für den zweiten Abschnitt 2, also 60° bis 120°, notwendigen Werte der Pulsweiten für die Phasenteilspannung 2B und 2C werden erfindungsgemäß durch die invertierten Pulsweiten $\overline{Ai}$ und $\overline{Bi}$ des ersten Abschnitts 1 bestimmt. Die Phasenteilspannung 2B im zweiten Abschnitt 2 ist nämlich zur Phasenteilspannung 1A im ersten Abschnitt 1 invertiert und die Phasenteilspannung 2C gleich der invertierenden Phasenteilspannung $\overline{1B}$. Im zweiten Abschnitt 2 bleibt erfindungsgemäß die erste Phase A ungetaktet, die aus Symmetriegründen vorteilhafterweise auf positives Potential gelegt wird.

Soll die Amplitude des erzeugenden sinusförmigen Stromes variiert werden, so ist der Wert für den Amplitudenfaktor AF entsprechend zu ändern. Wird der Amplitudenfaktor AF z. B. kleiner 1 gewählt, so verringert sich die Motoramplitude, während bei Werten des Amplitudenfaktors AF größer als 1, z. B. 1,2, eine Begrenzung der Pulsweite eintritt. Beim erfindungsgemäßen Verfahren werden vorteilhafterweise die notwendigen Pulsweiten Ai und Bi durch Abzählen eins Taktes in einer Steuereinrichtung erzeugt. Dieser Abzähltakt muß höher als die Schaltfrequenz der Pulsweitenmodulation sein. Die Verwendung von zwei unabhängigen Zähltakten für die Pulsweiten Ai bzw. Bi und des Höchstwertes H für eine Pulsweite ermöglicht in einfacher Weise die Motoramplitude und Motorfrequenz unabhängig voneinander zu variieren.

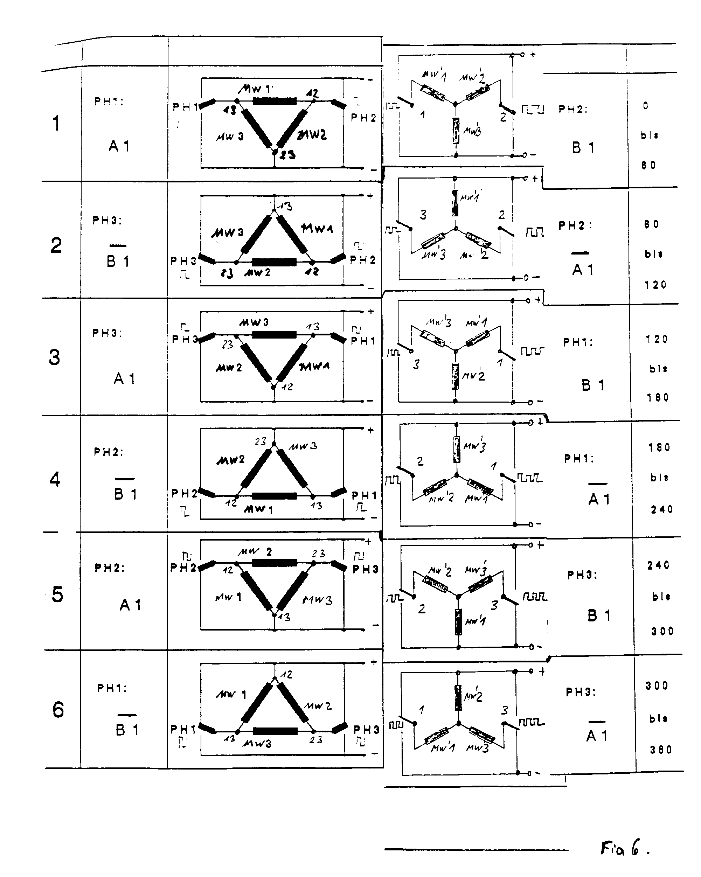

In FIG 5 ist das erfindungsgemäße Verfahren anhand eines beispielhaften Impulsdiagrammes zum Ansteuern der Halbbrücken des Umrichters für jede Phase PH1, PH2 und PH3 dargestellt. Für einen Abschnitt von 60° werden in diesem Ausführungsbeispiel 8 sinusbewertet pulsweitenmodulierte Impulse mit einer Schaltfrequenz f2 von z. B. 15 kHz vorgesehen. Die Schaltfrequenz ist im Vergleich zu der maximalen möglichen Pulsweite der Impulse in dem Faktor 8 niedriger gewählt. Die maximal mögliche Pulsweite ist durch die Schaltfrequenz begrenzt. Gemäß der Erfindung wird eine Periode der Dreiphasenspannung in sechs Abschnitte 1, 2, 3, 4, 5, 6 zu je 60° eingeteilt und in einem Abschnitt, z. B. im ersten Abschnitt 1, eine erste Phase PH1 mit einer Schaltfrequenz f2 und sinusbewerteten Pulsweiten Ai getaktet, die zweite Phase PH2 mit der Schaltfrequenz f2 und sinusbewerteten Pulsweiten Bi getaktet. Die dritte Phase PH3 bleibt ungetaktet. Die aus den Pulsweiten Bi bzw. Ai bestehenden Taktfolgen in einem Abschnitt werden in Figur 5 als die Taktfolgen B1 und A1 bezeichnet. Im darauffolgenden zweiten Abschnitt 2 wird die Ansteuerung der drei Phasen PH1, PH2 und PH3 zyklisch vertauscht und die sinusbewerteten Pulsweiten Ai und Bi des ersten Abschnitts zu den invertierten sinusbewerteten Pulsweiten $\overline{Ai}$ und $\overline{Bi}$ invertiert, also den invertierten Taktfolgen $\overline{A1}$ und $\overline{B1}$. Die Ansteuerung im zweiten Abschnitt 2 der Phasen PH 2 und PH 3 erfolgt also mit den invertierten sinusbewerteten Pulsweiten $\overline{Ai}$ und $\overline{Bi}$. Die erste Phase PH1 bleibt ungetaktet und wird aus Gründen der besseren Symmetrie bei der Ansteuerung der Phasen auf positives Potential gelegt. Im auf den zweiten Abschnitt 2 folgenden dritten Abschnitt 3 werden die Phasen PH1 und PH3 getaktet, während die zweite Phase PH2 ungetaktet bleibt und vorteilhafterweise auf negatives Potential gelegt wird. Die Ansteuerung der Phasen erfolgt mit den sinusbewerteten Pulsweiten Ai und Bi. Im vierten Abschnitt 4 wird die Ansteuerung der drei Phasen PH1, PH2, PH3 erneut zyklisch vertauscht und als Pulsweiten die in vertierten Pulsweiten Ai und Bi herangezogen. In den darauffolgenden Abschnitten erfolgt die Ansteuerung der drei Phasen PH1, PH2 und PH3 entsprechend.

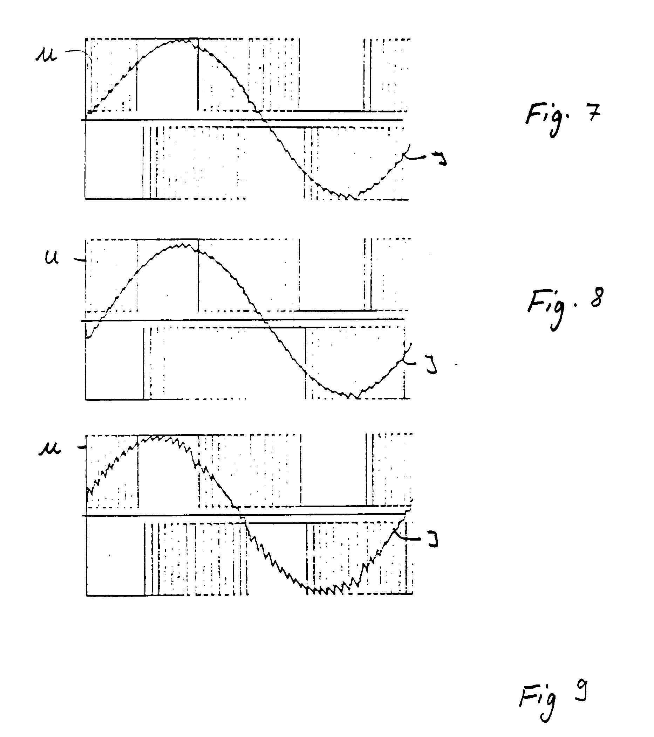

In FIG 6 ist das erfindungsgemäße Verfahren zum Ansteuern eines Drehstrommotors in Stern- und Dreiecksschaltung für eine volle Motorumdrehung dargestellt. Die Anschlußfolge der drei Motorwicklungen MW1, MW2 und MW3 zeigen die beiden mittleren Spalten von FIG 6, links die Dreiecksschaltung und rechts die Sternschaltung. Die Verbindungspunkte 12, 13 und 23 zwischen den Motorwicklungen MW1 und MW3, MW 1 und MW2, MW2 und MW3 in der Dreiecksschaltung und die Motorwicklungen MW1' und MW2' und MW3' der Sternschaltung werden beim erfindungsgemäßen Verfahren mit den bereits bekannten Pulsweiten Ai und Bi bzw. den dazugehrenden invertierten Pulsweiten $\overline{Ai}$ und $\overline{Bi}$ getaktet.

Im ersten Abschnitt 1, d. h. zwischen 0 und 60°, wird der Verbindungspunkt 13 der Dreiecksschaltung bzw. die erste Motorwicklung MW1' der Sternschaltung vom Ausgang der ersten Phase PH1 durch die Taktfolge A1 bestehend aus den Pulsweiten Ai getaktet. An den Verbindungspunkt 12 der Dreiecksschaltung und an die zweite Motorwicklung MW2' der Sternschaltung gelangt die am Ausgang der zweiten Phase PH2 anliegende Taktfolge B1, bestehend aus den Pulsweiten Bi. In diesem ersten Abschnitt 1 liegen die Verbindungspunkte 23 der Dreiecksschaltung und die dritte Motorwicklung MW3' der Sternschaltung auf negativem Potential.

Im zweiten Abschnitt zwischen 60 und 120° wird der Verbindungspunkt 23 vom Ausgang der dritten Phase PH3 entsprechend dem zyklischen Vertauschen der Phasenansteuerung und Invertieren der Pulsweiten in jedem zweiten Abschnitt mit der zur Taktfolge B1 invertierten Taktfolge $\overline{B1}$ getaktet, ebenso die dritte Wicklung MW3' in der Sternschaltung. Der Verbindungspunkt 13 in der Dreieckschaltung ist für die erste Motorwicklung MW1 der Sternschaltung mit dem Pluspol der Zwischenkreisspannung des Umrichters verbunden, während der Verbindungspunkt 12 in der Dreiecksschaltung und die zweite Wicklung MW2′ der Sternschaltung durch die zweite Phase PH2 mit der zur Taktfolge A1 invertierenden Taktfolge $\overline{A1}$ impulsweitenmoduliert zwischen Plus- und Minuspol der Zwischenkreisspannung umgeschaltet wird.

Im dritten Abschnitt, also zwischen 120° und 180°, liegt am Ausgang der dritten Phase PH3 die Taktfolge A1 an, die an den Verbindungspunkt 23 der Dreiecksschaltung und an die dritte Wicklung MW3 der Sternschaltung gelegt wird. Die Taktfolge B1 wird über die erste Phase PH1 an den Verbindungspunkt 13 der Dreiecksschaltung und die erste Motorwicklung MW1′ der Sternschaltung gelegt. Mit dem negativen Potential der Zwischenkreisspannung ist der Verbindungspunkt 12 der Dreiecksschaltung bwz. die zweite Motorwicklung MW2′ der Sternschaltung verbunden.

Der vierte Abschnitt zwischen 180° und 240° ist gekennzeichnet durch die an der zweiten Phase PH2 anliegende invertierte Taktfolge $\overline{B1}$, die an den Verbindungspunkt 12 der Dreiecksschaltung bzw. an die zweite Motorwicklung MW2 der Sternschaltung angelegt wird. Die an der ersten Phase PH1 anstehende und invertierte Taktfolge $\overline{A1}$ wird an den Verbindungspunkt 13 der Dreiecksschaltung und an die erste Motorwicklung MW1 der Sternschaltung gelegt. Mit dem positiven Pol der Zwischenkreisspannung ist in der Sternschaltung die dritte Motorwicklung MW3 und in der Dreiecksschaltung der Verbindungspunkt 23 verbunden.

Der vorletzte Abschnitt 5 einer vollen Motorperiode, d. h. zwischen 240° und 300°, zeichnet sich dadurch aus, daß der Verbindungspunkt 13 der Dreiecksschaltung und die erste Motorwicklung MW1′ der Sternschaltung mit dem negativen Potential der Zwischenkreisspannung in Verbindung steht. Die an der zweiten Phase PH2 anliegende Taktfolge A1 wird an den Verbindungspunkt 12 der Dreiecksschaltung und an die zweite Motorwicklung MW2′ der Sternschaltung gelegt. Die Taktfolge B1 an der dritten Phase PH3 gelangt an den Verbindungspunkt 23 der Dreiecksschaltung und an die dritte Motorwicklung MW3′ der Sternschaltung.

Die im sechsten Abschnitt 6 zwischen 300° und 360° an der ersten Phase PH1 erscheinende invertierte Taktfolge $\overline{B1}$ wird an den Verbindungspunkt 13 der Dreiecksschaltung und an die erste Motorwicklung MW1′ der Sternschaltung geschaltet. Die invertierte Taktfolge $\overline{A1}$ der dritten Phase PH3 gelangt an den Verbindungspunkt 23 der Dreiecksschaltung bzw. an die dritte Motorwicklung MW3′ der Sternschaltung. Mit dem positiven Potential der Zwischenkreisspannung ist der Verbindungspunkt 12 der Dreiecksschaltung und die zweite Motorwicklung MW2′ der Sternschaltung verbunden.

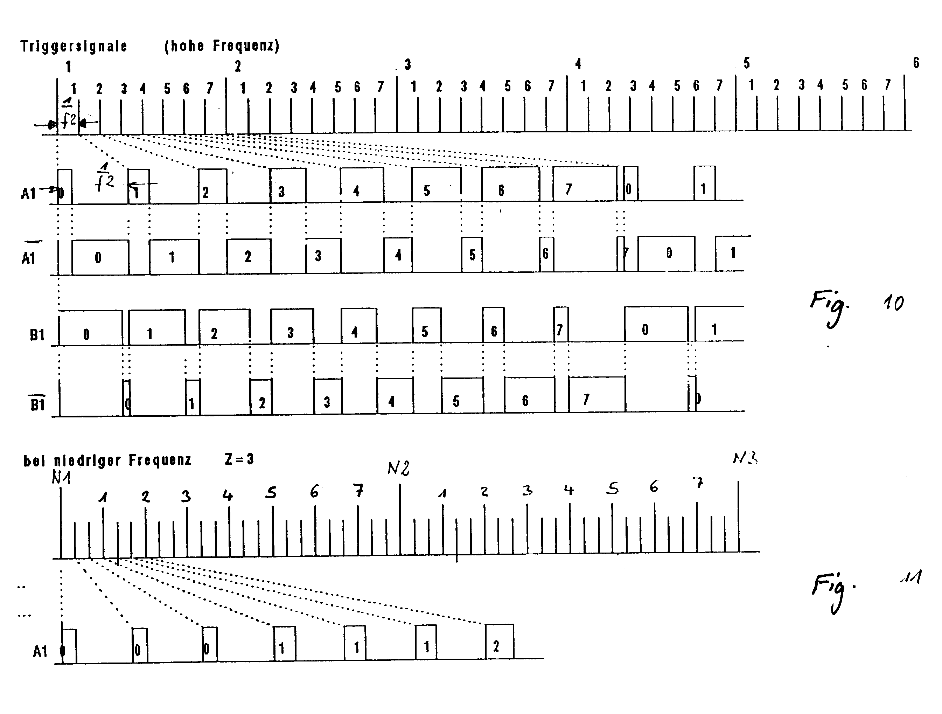

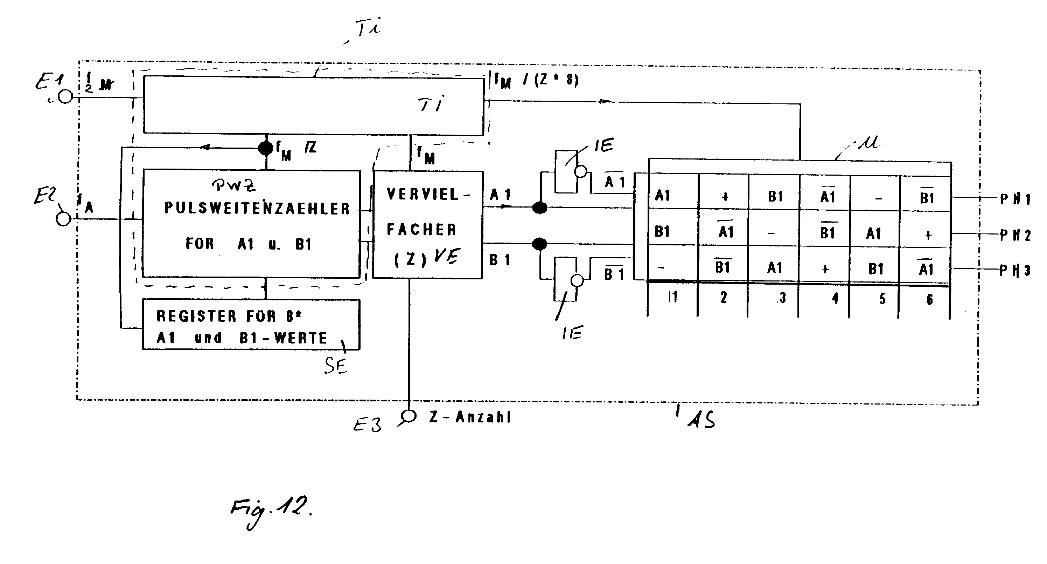

In den Figuren 7, 8 und 9 ist jeweils der Stromverlauf in der Motorwicklung MW3 beim Einschalten und im eingeschwungenen Zustand bei unterschiedlichen Lasten dargestellt. FIG 7 zeigt den Stromverlauf durch diese dritte Motorwicklung MW3 unmittelbar nach dem Einschaltvorgang, bei einer Motorfrequenz von 162 Hz einer Induktivität der Motorwicklung von 0,5 H und einem Widerstand der Motorwicklung von 500 Ohm. FIG 8 zeigt den eingeschwungenen Zustand. Es ist deutlich die Phasenverschiebung zwischen dem Strom I und der Spannung zu erkennen. Beträgt die Induktivität der Motorwicklung 0,08 H und der Widerstand R der Motorwicklung 275 Ohm, so reduziert sich die Phasenverschiebung, wie in FIG 9 zu erkennen ist. Zusätzlich ist die geringere Siebwirkung für den Strom I anhand des stärkeren zakenförmigeren Verlaufes des Stromes zu erkennen.

In FIG 10 ist die sinusbewertete Pulsweitenmodulation für das erfindungsgemäße Verfahren in zeitlich gedehnter Darstellung nochmals gezeigt. Jeder der 60°-Abschnitte 1, 2, 3, 4, 5 und 6 weist eine Taktfolge mit der Schaltfrequenz f2 auf. In diesem Ausführungsbeispiel nach FIG 9 sind 8 Impulse vorgesehen, die mit den Pulsweiten Ai und Bi pulsweitenmoduliert sind. Die Pulsweiten Ai der Taktfolge A1 nimmt zu, während die Pulsweiten Bi für die Taktfolge B1 bei jedem weiteren der acht Impulse kleiner wird. In FIG 10 sind ebenfalls die zu den Taktfolgen A1 und B1 invertierten Taktfolgen $\overline{A1}$ und $\overline{B1}$ dargestellt, wie diese zur Ansteuerung der drei Phasen erfindungsgemäß benötigt werden. Die Anzahl der Takte in den Taktfolgen A1 und B1 innerhalb eines 60°-Abschnittes ist prinzipiell frei wählbar. Für einen guten sinusförmigen Stromverlauf empfiehlt es sich jedoch die Anzahl der Takte möglichst hoch zu wählen. Es hat sich gezeigt, daß z. B. 8 Impulse für einen 60°-Abschnitt durchaus ausreichend sind. 8 Impulse in einem 60°-Abschnitt entspricht nach dem bisher bekannten Verfahren einer Stützstellenzahl von 48. Bei hohen Motorfrequenzen muß die Anzahl der Takte in einem Abschnitt jedoch klein gewählt werden, vorzugsweise kleiner als 8. Bei sehr hohen Motorfrequenzen werden 8 Impulse je Abschnitt zuviel sein. Die Anzahl der Impulse wird deshalb bei sehr hohen Motorfrequenzen kleiner gewählt. Im Gegensatz dazu werden 8 Impulse je Abschnitt bei sehr niedrigen Motorfrequenzen zuwenig sein.

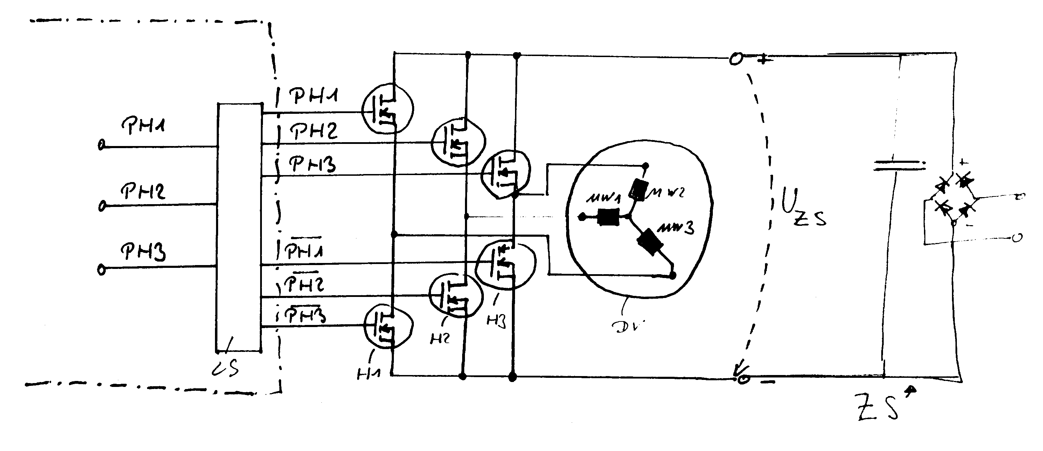

Es empfiehlt sich daher - wie im Zusammenhang mit FIG 11 bildlich dargestellt - die Impulse gleicher Pulsweite in einem Abschnitt mindestens zweimal, vorzugsweise öfters zu wiederholen. In FIG 11 ist dies für die dreimalige Wiederholung eines Impulses gleicher Pulsweite gezeigt. Diese Pulswiederholung ist besonders bei niedrigen Motorfrequenzen und kleinen Motoren vorteilhaft, da dadurch ein gut geglätteter

EP 0 363 514 B1

Motorstrom erzielt wird. Für einen 50-Hz-Motor ($f_m$ = 50 Hz) ergibt sich bei einer sechsmaligen Pulswiederholung (Z = 6) die Schaltfrequenz f2 wie folgt:

$$f2 = f_m \cdot 48 \cdot Z = 14.400 \text{ kHz.}$$

Wird der Amplitudenfaktor AF gleich 1 und der höchste Zählwert für die Pulsweite = 64 gesetzt, so ergibt sich für die Abzählfrequenz $f_A$ zum Generieren der Pulsweiten folgende Beziehung:

$$f_A = f2 \cdot H/AF = 921,6 \text{ kHz.}$$

In FIG 12 ist eine Schaltungsanordnung zur Durchführung des erfindungsgemäßen Verfahrens zum Ansteuern von Drehstromverbrauchern dargestellt. Die Schaltungsanordnung weist drei parallel geschaltete Halbbrücken H1, H2, H3 auf, an deren Ausgangsklemmen AG1, AG2, AG3 die drei Motorwicklungen MW1, MW2, MW3 eines Drehstromverbrauchers DV, z. B. ein Asynchronmotor ein Synchronmotor, angeschlossen sind. Die drei Halbbrücken H1, H2 und H3 sind an eine gleichgerichtete Zwischenkreisspannung $U_{ZS}$ angeschlossen, die von einer die gleichgerichtete Zwischenkreisspannung $U_{ZS}$ erzeugenden Anordnung ZS geliefert wird. Eine Ansteuereinrichtung AS ist zum Ansteuern der drei Halbbrücken H1, H2, H3 vorgesehen. Dazu weist die Ansteuereinrichtung AS drei Spannungen für je eine Phase PH1, PH2, PH3 auf, die an die Steuereingänge der Halbbrücken H1, H2 und H3 geschaltet sind. Die Ansteuereinrichtung AS weist darüber hinaus eine Speichereinrichtung SE zum Speichern der Werte für die sinusbewerteten Pulsweiten Ai, Bi und eine Takteinrichtung Ti zum Generieren der Schaltfrequenz f2 und der Abzählfrequenz $f_A$ für die Werte der Pulsweiten Ai, Bi auf. Weiterhin ist in der Ansteuereinrichtung AS eine Umschalteinrichtung U zum zyklischen Vertauschen der an den einzelnen Phasenausgängen auftretenden Taktfolgen vorhanden.

Die Speichereinrichtung SE für die Amplitudenwerte der Stützstellen ist mit einem Pulsweitenzähler PWZ verbunden, über den mit einer über eine zweite Eingangsklemme E2 zugeführten Abzählfrequenz $f_A$ die Pulsweiten bestimmt werden. Die Speichereinrichtung SE ist zusätzlich mit der Takteinrichtung Ti verbunden, an der über eine erste Eingangklemme E1 die Schaltfrequenz f2 extern zugeführt wird. Die Ansteuereinrichtung AS verfügt zusätzlich über eine Vervielfachereinrichtung VE, über die die Anzahl der Impulswiederholungen realisiert wird. Dazu ist die Vervielfachereinrichtung VE mit einer dritten Eingangsklemme E3 verbunden, an der extern die gewünschte Anzahl der Pulswiederholungen festgelegt werden kann. Weiterhin ist die Vervielfachereinrichtung VE mit dem Pulsweitenzähler PWZ und der Takteinrichtung Ti in Verbindung. Über eine in der Ansteuerschaltung AS enthaltene Invertiereinrichtung IE können die sinusbewerteten Pulsweiten Ai und Bi zu den invertierten Pulsweiten $\overline{Ai}$ und $\overline{Bi}$ invertiert werden. Mit Hilfe der Umschalteinrichtung U können die Ausgänge der drei Phasen PH1, PH2 und PH3 mit den erfindungs-gemäßen Pulsweiten Ai, Bi, $\overline{Ai}$, $\overline{Bi}$ getaktet werden. Eine Logikschaltung LS sorgt dafür, daß jede Phase PH1, PH2 und PH3 zusätzlich als invertierte Phasen $\overline{PH1}$, $\overline{PH2}$ und $\overline{PH3}$ zur Verfügung stehen, so daß die zwei Schalter einer Halbbrücke H1, H2, H3 gegenphasig angesteuert werden können.

Bezugszeichenliste

| | |
|---|---|
| I | Gleichrichteranordnung |
| II | Transistorhalbbrücke |
| III | Drehstrommotor |
| IV | Ansteuereinrichtung |
| A | erste sinusförmige Phasenspannungh |
| B | zweite sinusförmige Phasenspannung |
| C | dritte sinusförmige Phasenspannung |
| 1A | erste Phasenteilspannung im ersten Abschnitt |
| 1B | zweite Phasenteilspannung im ersten Abschnitt |
| 1C | dritte Phasenteilspannung im ersten Abschnitt |
| 2A | erste Phasenteilspannung im zweiten Abschnitt |
| 2B | zweite Phasenteilspannung im zweiten Abschnitt |
| 2C | dritte Phasenteilspannung im zweiten Abschnitt |
| 1 | erster Abschnitt, 0° - 60° |
| 2 | zweiter Abschnitt, 60° - 120° |
| 3 | dritter Abschnitt, 120° - 180° |
| 4 | vierter Abschnitt, 180° - 240° |
| 5 | fünfter Abschnitt, 240° - 300° |

6

| | |
|---|---|
| 6 | sechster Abschnitt, 300° - 360° |
| Ai, Bi, Ci | Pulsweiten |
| $\overline{Ai}$, $\overline{Bi}$ | invertierte Pulsweiten |
| A1 | Taktfolge mit den Pulsweiten Ai |
| B1 | Taktfolge mit den Pulsweiten Bi |
| $\overline{A1}$ | invertierte Taktfolge zu A1 |
| $\overline{B1}$ | invertierte Taktfolge zu B1 |
| AF | Amplitudenfaktor |
| AG1 | Ausgangsklemme der ersten Halbbrücke |
| AG2 | Ausgangsklemme der zweiten Halbbrücke |
| AG3 | Ausgangsklemme der dritten Halbbrücke |
| AS | Ansteuereinrichtung |
| DV | Drehstromverbraucher |
| E1 | erste Eingangsklemme |
| E2 | zweite Eingangsklemme |
| E3 | dritte Eingangsklemme |
| f1 | zu erzeugende Sinusfrequenz der 3-Phasenspannung |
| f2 | Schaltfrequenz |
| $f_A$ | Abzählfrequenz |
| fm | Motorfrequenz |
| H | Höchstwert der Pulsweite |
| H1 | erste Halbbrücke |
| H2 | zweite Halbbrücke |
| H3 | dritte Halbbrücke |
| IE | Invertiereinrichtung |
| K | Konstante |
| MW1 | erste Motorwicklung der Dreiecksschaltung |
| MW2 | zweite Motorwicklung der Dreiecksschaltung |
| MW3 | dritte Motorwicklung der Dreiecksschaltung |
| MW1$'$ | erste Motorwicklung der Stromschaltung |
| MW2$'$ | zweite Motorwicklung der Stromschaltung |
| MW3$'$ | dritte Motorwicklung der Stromschaltung |
| PH1 | erste Phase |
| PH2 | zweite Phase |
| PH3 | dritte Phase |
| PWZ | Pulsweitenzähler |
| SE | Speichereinrichtung |
| Ti | Takteinrichtung |
| U | Umschalteinrichtung |
| $U_{ZS}$ | Zwischenkreisspannung |
| VE | Vervielfachereinrichtung |
| Z | Anzahl der Pulswiederholungen |
| ZS | Anordnung zur Erzeugung der Zwischenkreisspannung |

$$\left.\begin{array}{l} 12 \\ 13 \\ 23 \end{array}\right\} \quad \text{Verbindungspunkte der Dreiecksschaltung}$$

**Patentansprüche**

1. Verfahren zum Ansteuern von Drehstromverbrauchern durch sinusbewertete Pulsweitenmodulation von drei um 120° zueinander verschobener Phasen, **dadurch gekennzeichnet,** daß eine Periode der zu erzeugenden 3-Phasenspannung in sechs Abschnitte (1, 2, 3, 4, 5, 6) zu je 60° eingeteilt wird, daß in einem ersten Abschnitt (1) eine erste Phase (PH1) mit einer Schaltfrequenz (f2) und sinusbewerteten Pulsweiten (Ai) getaktet und eine zweite Phase (PH 2) mit der Schaltfrequenz (f2) und sinusbewerteten

7

Pulsweiten (Bi) getaktet wird und daß eine dritte Phase (PH3) ungetaktet bleibt, daß die Ansteuerung der drei Phasen (PH1, PH2, PH3) in aufeinanderfolgenden Abschnitten (1, 2, 3...) zyklisch vertauscht wird, und daß in jedem zweiten Abschnitt (2, 4, 6) mit zu den sinusbewerteten Pulsweiten (Ai, Bi) invertierten sinusbewerteten Pulsweiten ($\overline{Ai}$, $\overline{Bi}$) getaktet wird.

2. Verfahren nach Anspruch 1, **dadurch gekennzeichnet,** daß die Pulsweiten (Ai) durch Ai = K cos (Wi - 60°) und die Pulsweiten (Bi) durch Bi = K • cos (Wi) bestimmt werden, wobei K eine Konstante und Wi der Winkel einer Stützstelle i die Frequenz (f1) der zu erzeugenden 3-Phasenspannung ist.

3. Verfahren nach Anspruch 1 oder 2, **dadurch gekennzeichnet,** daß die in einem Abschnitt (1, 2, 3,...) jeweils ungetaktete Phase abwechselnd mit einem positiven Potential und einem negativen Potential verbunden wird.

4. Verfahren nach einem der Ansprüche 1 bis 3, **dadurch gekennzeichnet,** daß die Pulsweiten (Ai) und die Pulsweiten (Bi) und deren invertierende Pulsweiten ($\overline{Ai}$ und $\overline{Bi}$) durch Abzählen mindestens eines Taktes erzeugt wird, der höherfrequenter als die Schaltfrequenz (f2) ist.

5. Verfahren nach einem der Ansprüche 1 bis 4, **dadurch gekennzeichnet,** daß die Frequenz (f1) der zu erzeugenden 3-Phasenspannung durch Multiplizieren der Pulsweiten (Ai) und der Pulsweiten (Bi) mit einem Faktor (M) variiert wird.

6. Verfahren nach einem der Ansprüche 1 bis 5, **dadurch gekennzeichnet,** daß die Amplitude der Frequenz (f1) der zu erzeugenden 3-Phasenspannung durch Variieren der Schaltfrequenz (f2) verändert wird.

7. Verfahren nach einem der Ansprüche 1 bis 6, **dadurch gekennzeichnet,** daß die Anzahl der sinusbewerteten Pulsweiten (Ai, Bi) frei wählbar ist.

8. Verfahren nach einem der Ansprüche 1 bis 6, **dadurch gekennzeichnet,** daß zur Verkürzung der Impulsfolge die Impulse mit den gleichen Pulsweiten (Ai) und die Impulse mit den Pulsweiten (Bi) mindestens zweimal wiederholt werden.

9. Verfahren nach einem der Ansprüche 1 bis 8, **gekennzeichnet** durch die Verwendung beim Ansteuern von Asynchronmotoren.

10. Verfahren nach einem der Ansprüche 1 bis 8, **gekennzeichnet** durch die Verwendung beim Ansteuern von Synchronmotoren.

11. Vorrichtung zur Durchführung des Verfahrens nach einem der Ansprüche 1 bis 10, **gekennzeichnet** durch die Merkmale:
    - drei parallelgeschaltete Halbbrücken (H1, H2, H3), an deren Ausgangsklemmen (AG1, AG2, AG3) die drei Wicklungen (MW1, MW2, MW3) eines Drehstromverbrauchers (DV) angeschlossen sind,
    - eine die drei Halbbrücken (H1, H2, H3) mit einer gleichgerichteten Zwischenkreisspannung ($U_{ZS}$) versorgende Anordnung (ZS),
    - eine Ansteuereinrichtung (AS) zum Ansteuern der drei Halbbrücken (H1, H2, H3) mit einer Speichereinrichtung (SE) zum Speichern der Werte für die sinusbewerteten Pulsweiten (Ai, Bi), einer Takteinrichtung (Ti) zum Generieren der Schaltfrequenz (f2) und der Abzählfrequenz (f3) für die Werte der Pulsweiten (Ai, Bi), und eine Umschalteinrichtung (U) zum zyklischen Vertauschen der Ansteuerung der drei Halbbrücken (H1, H2, H3).

12. Vorrichtung nach Anspruch 11, **dadurch gekennzeichnet,** daß die Schaltfrequenz (f2) und Abzählfrequenz (f3) der Takteinrichtung (Ti) einstellbar ist.

13. Vorrichtung nach Anspruch 12, **dadurch gekennzeichnet,** daß die Speichereinrichtung (SE) aus mindestens einem ROM-Speicher gebildet ist.

14. Vorrichtung nach einem der Ansprüche 11 bis 13, **dadurch gekennzeichnet,** daß die Ansteuereinrichtung (AS) eine Anordnung (WH) zur Wiederholung der Pulsweiten (Ai, Bi) aufweist, wobei die Anzahl

8

der Wiederholungen einstellbar ist.

15. Vorrichtung nach einem der Ansprüche 12 bis 14, **dadurch gekennzeichnet,** daß der Drehstromverbraucher (DV) in Sternschaltung geschaltet ist.

16. Vorrichtung nach einem der Ansprüche 12 bis 14, **dadurch gekennzeichnet,** daß der Drehstromverbraucher (DV) in Dreiecksschaltung geschaltet ist.

**Claims**

1. Method for driving three-phase loads by sine-weighted pulse width modulation of three phases shifted by 120° with respect to one another, characterised in that one period of the three-phase voltage to be generated is divided into six sections (1, 2, 3, 4, 5, 6) of 60° each, in that in a first section (1) a first phase (PH1) is switched with a switching frequency (f2) and sine-weighted pulse widths (Ai) and a second phase (PH2) is switched with the switching frequency (f2) and sine-weighted pulse widths (Bi) and in that a third phase (PH3) remains unswitched, in that the drive for the three phases (PH1, PH2, PH3) is cyclically exchanged in successive sections (1, 2, 3...), and in that in each second section (2, 4, 6) switching occurs with sine-weighted pulse widths ($\overline{Ai}$, $\overline{Bi}$) inverted with respect to the sine-weighted pulse widths (Ai, Bi).

2. Method according to Claim 1, characterised in that the pulse widths (Ai) are determined by Ai = K cos (Wi - 60°) and the pulse widths (Bi) are determined by Bi = K. cos (Wi), K being a constant and Wi being the angle of an interpolation point i the frequency (f1) of the three-phase voltage to be generated.

3. Method according to Claim 1 or 2, characterised in that the phase which is in each case unswitched in one section (1, 2, 3,...) is alternately connected to a positive potential and to a negative potential.

4. Method according to one of Claims 1 to 3, characterised in that the pulse widths (Ai) and the pulse widths (Bi) and their inverting pulse widths ($\overline{Ai}$ and $\overline{Bi}$) are generated by counting down at least one cycle which has a higher frequency than the switching frequency (f2).

5. Method according to one of Claims 1 to 4, characterised in that the frequency (f1) of the three-phase voltage to be generated is varied by multiplying the pulse widths (Ai) and the pulse widths (Bi) by a factor (M).

6. Method according to one of Claims 1 to 5, characterised in that the amplitude of the frequency (f1) of the three-phase voltage to be generated is varied by varying the switching frequency (f2).

7. Method according to one of Claims 1 to 6, characterised in that the number of sine-weighted pulse widths (Ai, Bi) is freely selectable.

8. Method according to one of Claims 1 to 6, characterised in that, for shortening the pulse sequence, the pulses having the same pulse widths (Ai) and the pulses having the pulse widths (Bi) are repeated at least twice.

9. Method according to one of Claims 1 to 8, characterised by being used in driving asynchronous motors.

10. Method according to one of Claims 1 to 8, characterised by being used in driving synchronous motors.

11. Device for carrying out the method according to one of Claims 1 to 10, characterised by the following features:
    - three parallel-connected half bridges (H1, H2, H3), to the output terminals (AG1, AG2, AG3) of which the three windings (MW1, MW2, MW3) of a three-phase load (DV) are connected,
    - an arrangement (ZS) supplying the three half-bridges (H1, H2, H3) with a rectified link-circuit voltage ($U_{ZS}$),
    - a drive device (AS) for driving the three half bridges (H1, H2, H3) with a storage device (SE) for storing the values for the sine-weighted pulse widths (Ai, Bi), a switching device (Ti) for generating the switching frequency (f2) and the counting-down frequency (f3) for the values of the pulse widths (Ai, Bi) and a change-over device (U) for cyclically exchanging the drive for the three half-bridges (H1, H2, H3).

**12.** Device according to Claim 11, characterised in that the switching frequency (f2) and counting-down frequency (f3) of the switching device (Ti) is adjustable.

**13.** Device according to Claim 12, characterised in that the storage device (SE) is formed from at least one ROM memory.

**14.** Device according to one of Claims 11 to 13, characterised in that the drive device (AS) exhibits an arrangement (WH) for repeating the pulse widths (Ai, Bi), the number of repetitions being adjustable.

**15.** Device according to one of Claims 12 to 14, characterised in that the three-phase load (DV) is connected in a star circuit.

**16.** Device according to one of Claims 12 to 14, characterised in that the three-phase load (DV) is connected in a delta circuit.

**Revendications**

**1.** Procédé pour commander des appareils d'utilisation triphasés au moyen d'une modulation d'impulsions en durée, à pondération sinusoïdale, de trois phases décalées réciproquement de 120°, caractérisé par le fait qu'une période de la tension triphasée devant être produite est subdivisée en six sections (1,2,3,4,5,6) de chacune 60°, que dans une première section (1), une première phase (PH1) est commandée de façon cadencée avec une fréquence de commutation (f2) et des durées d'impulsions (Ai) à pondération sinusoïdale et une seconde phase (PH2) est commandée de façon cadencée avec la fréquence de commutation (f2) et des durées d'impulsions (Bi) à pondération sinusoïdale, qu'une troisième phase (PH3) reste non commandée de façon cadencée, que la commande des trois phases (PH1, PH2, PH3) dans des sections successives (1,2,3...) est permutée cycliquement et que dans chaque seconde section (2,4,6), la commande cadencée est exécutée avec des durées d'impulsions ($\overline{Ai}$, $\overline{Bi}$) à pondération sinusoïdale, inversées par rapport aux durées d'impulsions (Ai, Bi) à pondération sinusoïdale.

**2.** Procédé suivant la revendication 1, caractérisé par le fait que les durées d'impulsions (Ai) sont déterminées par Ai = K . cos (Wi - 60°) et que les durées d'impulsions (Bi) sont déterminées par Bi = K . cos (Wi), K étant une constante et Wi l'angle d'un point d'appui i dont la fréquence (f1) de la tension triphasée devant être produite.

**3.** Procédé suivant la revendication 1 ou 2, caractérisé par le fait que la phase, qui respectivement n'est pas commandée de façon cadencée dans une section (1,2,3,...) est placée alternativement à un potentiel positif et à un potentiel négatif.

**4.** Procédé suivant l'une des revendications 1 à 3, caractérisé par le fait que les durées d'impulsions (Ai) et les durées d'impulsions (Bi) et les durées d'impulsions inverses des précédentes ($\overline{Ai}$ et $\overline{Bi}$) sont formées par comptage d'au moins une cadence, qui possède une fréquence supérieure à la fréquence de commutation (f2).

**5.** Procédé suivant l'une des revendications 1 à 4, caractérisé par le fait que la fréquence (f1) de la tension triphasée devant être produite est modifiée par multiplication des durées d'impulsions (Ai) et des durées d'impulsions (Bi) avec un facteur (M).

**6.** Procédé suivant l'une des revendications 1 à 5, caractérisé par le fait que l'amplitude de la fréquence (f1) de la tension triphasée devant être produite est modifiée par modification de la fréquence de commutation (f2).

**7.** Procédé suivant l'une des revendications 1 à 6, caractérisé par le fait que le nombre des durées d'impulsions (Ai, Bi) de pondération sinusoïdale peut être choisi librement.

**8.** Procédé suivant l'une des revendications 1 à 6, caractérisé par le fait que pour réduire la séquence des impulsions, les impulsions possédant les mêmes durées (Ai) et les impulsions possédant les durées (Bi) sont répétées au moins deux fois.

**9.** Procédé suivant l'une des revendications 1 à 8, caractérisé par son application à la commande de moteurs asynchrones.

**10.** Procédé suivant l'une des revendications 1 à 8, caractérisé par son application à la commande de moteurs synchrones.

**11.** Dispositif pour la mise en oeuvre du procédé suivant l'une des revendications 1 à 10, caractérisé par les particularités suivantes :
- trois demi-ponts (H1,H2,H3), qui sont branchés en parallèle et aux bornes de sortie (AG1, AG2, AG3) desquelles sont raccordés les trois enroulements (MW1, MW2, MW3) d'un appareil d'utilisation triphasé (DV),
- un dispositif (ZS), qui alimente les trois demi-ponts (H1, H2, H3) avec une tension redressée de circuit intermédiaire (U$_{ZS}$),
- un dispositif de commande (AS) servant à commander les trois demi-ponts (H1,H2,H3), comportant un dispositif de mémoire (SE) servant à mémoriser les valeurs pour les durées d'impulsions (Ai,Bi) à pondération sinusoïdale, à un dispositif de commande (Ti) servant à produire la fréquence de commutation (f2) et la fréquence de décomptage (f3) pour les valeurs des durées d'impulsions (Ai,Bi) et un dispositif de commutation (U) pour permuter cycliquement la commande des trois demi-ponts (H1,H2,H3).

**12.** Dispositif suivant la revendication 11, caractérisé par le fait que la fréquence de commutation (f2) et la fréquence de décomptage (f3) du dispositif de cadence (Ti) sont réglables.

**13.** Dispositif suivant la revendication 12, caractérisé par le fait que le dispositif de mémoire (SE) est constitué par au moins une mémoire ROM.

**14.** Dispositif suivant l'une des revendications 11 à 13, caractérisé par le fait que le dispositif de commande (AS) comporte un dispositif (WH) servant à répéter les durées d'impulsions (Ai,Bi), le nombre des répétitions étant réglable.

**15.** Dispositif suivant l'une des revendications 12 à 14, caractérisé par le fait que l'appareil d'utilisation triphasé (DU) est branché selon un montage en étoile.

**16.** Dispositif suivant l'une des revendications 12 à 14, caractérisé par le fait que l'appareil d'utilisation triphasé (DV) est branché selon un circuit en triangle.

11

Fig. 1

a.)      b.)      c.)

Fig. 2

a.)      b.)      c.)

Fig 3.

Fig. 4

Fig. 5

Fig 6.

14

Fig. 7

Fig. 8

Fig 9

Triggersignale    (hohe Frequenz)

A1

$\overline{A1}$

B1

$\overline{B1}$

Fig.  10

bei niedriger Frequenz    Z = 3

A1

Fig.  11

EP 0 363 514 B1

Fig. 12.

PH1
PH2
PH3

PH1
PH2
PH3

ST

PH1
PH2
PH3

$\overline{PH1}$
$\overline{PH2}$
$\overline{PH3}$

H1
H2
H3

MW1  MW2
MW3

DV

$U_{ZS}$

ZS

EP 0 363 514 B1